# EUROPÄISCHE PATENTANMELDUNG

(11) **EP 1 151 784 A1**
(43) Veröffentlichungstag der Anmeldung: **07.11.2001**
(21) Anmeldenummer: 00122599.4
(22) Anmeldetag: 17.10.2000
(51) Int. Cl.: B01D 53/14, B01D 47/12

(54) **Luftfiltervorrichtung**

(30) Priorität: 04.05.2000 DE 10021548
(71) Anmelder: Brändle Air-Clean AG, 9607 Mosnang (CH)
(72) Erfinder: Geier, Kurt F., 78176 Blumberg (DE)
(74) Vertreter: Behrmann, Niels, Dipl.-Ing.

(57) **Zusammenfassung**

Die Erfindung betrifft eine Luftfiltervorrichtung mit einem Lufteinlass, einem diesem nachgeschalteten Vorfilter, einem dem Vorfilter nachgeschalteten Hauptfilter und einem dem Hauptfilter nachgeschalteten Auslass für Reinluft, wobei das Vor- und/oder Hauptfilter Mittel zum kontinuierlichen Benetzen einer Wirkungsoberfläche des Filters mit einem in einem Flüssigkeitskreislauf fließenden Pflanzenöl aufweist.

## Beschreibung

Die vorliegende Erfindung betrifft eine Luftfiltervorrichtung nach dem Oberbegriff des Anspruches 1.

Aus dem Stand der Technik, insbesondere dem Gebiet der industriellen Abluftreinigung, sind zahlreiche Filtervorrichtungen bekannt, die, etwa zur Filterung gesundheitsschädlicher Stäube oder anderer Partikel in industriellen Räumen, einen oder mehrere Filter in Reihe geschaltet aufweisen. Vor allem im gewerblichen Bereich sorgen zudem Vorschriften von Berufsgenossenschaften bzw. Immissionsschutzgesetze dafür, dass Luftfilteranlagen in besonders gefährdeten bzw. besonders exponierten Produktionsumgebungen eingesetzt werden.

Herkömmliche Filter- bzw. Luftaufbereitungssysteme setzen zu diesem Zweck bevorzugt Aktivkohle- oder Papierfilter ein (wie sie z.B. auch im Kraftfahrzeugbereich allgemein gängig sind), so dass aus technischer Sicht, neben einer Filterkapazität bzw. Reinigungswirkung, insbesondere auch gute Zugänglichkeit eines solchen Filters für Wartung bzw. Erneuerung kritische Parameter sind. Entsprechend hoch ist dabei der Installations- und Betriebsaufwand, insbesondere in besonders exponierten (industriellen) Umgebungen, die eine hohe Schadstoffkonzentration in der Abluft und einen entsprechend hohen Unterhalts- bzw. Pflegebedarf besitzen.

Bekannte, gattungsgemäße Filteranlagen sind dabei nicht nur zur Filterung von Stäuben vorgesehen, sondern insbesondere auch zur Absorption von Geruchsstoffen, Ausdünstungen, Gasen, Dämpfen und anderen gasförmigen Verunreinigungen, wobei hier Aktivkohlefilter mit ihren zahllosen Poren und einer sehr großen wirksamen Oberfläche besondere Einsatzgebiete finden.

Neben einem auch hier bestehenden, hohen Wartungsaufwand besitzen Aktivkohlefilter jedoch zusätzlich den Nachteil, dass diese vergleichsweise teuer sind und, bezogen auf eine wirksame Lebensdauer bis zum Zusetzen der Mehrzahl von Poren mit Verunreinigungsstoffen, die Filterrate und damit die Filterwirkung nicht immer gleichmäßig ist.

Aufgabe der vorliegenden Erfindung ist es daher, insbesondere für industrielle und Produktionsumgebungen mit stark belasteter Abluft eine Luftfiltervorrichtung zu schaffen, welche gegenüber bekannten, mehrstufigen Filtervorrichtungen im Hinblick auf Wartung und Reinigung deutlich vereinfacht ist und sich darüber hinaus durch besonders gute und konstante Filterwirkung über den gesamten Betriebszeitraum auszeichnet.

Die Aufgabe wird durch die Luftfiltervorrichtung mit den Merkmalen des Patentanspruches 1 bzw. 11 sowie die Verwendungen mit den Merkmalen der Ansprüche 9 und 10 gelöst; zusätzlich wird Schutz im Rahmen der vorliegenden Anmeldung beansprucht für ein Verfahren zur Luftfilterung, welches den Betrieb der Vorrichtung nach einem der Ansprüche 1 bis 8 betrifft. Vorteilhafte Weiterbildungen der Erfindung sind in den Unteransprüchen beschrieben.

In erfindungsgemäß vorteilhafter Weise wird durch die vorliegende Erfindung ausgenutzt, dass Pflanzenöle, und besonders geeignet Rapsöle, für eine Abluftreinigung sehr günstige Eigenschaften haben, denn das erfindungsgemäß eingesetzte Pflanzenöl ist nicht nur äußerst wirksam bei der Aufnahme von Staubpartikeln und weiteren Mikroteilchen in der Abluft während des eigentlichen Filterungsvorganges, auch besitzt das Öl die Eigenschaft, dass sich die so im Filter aufgenommenen Partikel bei stillstehendem Öl (insbesondere in einer dem erfindungsgemäßen Flüssigkeitskreislauf zugeordneten Ölwanne) am Boden absetzen und damit auf einfache Weise abgezogen werden können.

Durch das erfindungsgemäß verwendete Kreislaufprinzip bei der kontinuierlichen Benetzung des Filters mit dem Pflanzenöl wird dadurch, wie unmittelbar deutlich werden sollte, der Wartungs- und Pflegeaufwand einer mit der erfindungsgemäßen Luftfiltervorrichtung realisierten Filteranlage deutlich verringert, denn, im Gegensatz zu den eingangs beschriebenen, gattungsgemäßen Filtervorrichtungen, z.B. auf Aktivkohlebasis, ist es im Fall der vorliegenden Erfindung nicht notwendig, hier zu Wartungszwecken am Filterort selbst Filtermaterial od.dgl. auszuwechseln; vielmehr erfolgt das Entfernen der ausgefilterten Verunreinigungspartikel, wie beschrieben, durch Abziehen aus dem Pflanzenöl an einer bevorzugt zentralen und einfach zugänglichen Pflanzenöl-Sammelstelle innerhalb des Flüssigkeitskreislaufes.

Besonders bevorzugt ist es im Rahmen der vorliegenden Erfindung, dem Vorfilter sowie dem Hauptfilter jeweils einen getrennten Flüssigkeitskreislauf zuzuordnen, wobei in mindestens einem dieser Flüssigkeitskreisläufe das Pflanzenöl fließt, und in dem jeweils anderen dieser Flüssigkeitskreisläufe entweder ebenfalls Pflanzenöl, oder aber ein anderes Fluid, bevorzugt ist hier eine alkalische Wasserlösung, fließen kann. Insbesondere dann, wenn getrennte Flüssigkeitskreisläufe mit getrennten Fluiden (bzw. Fluiden mit verschiedenen Säuregehalten) verwendet werden, bietet es sich zudem im Rahmen einer bevorzugten Weiterbildung der Erfindung an, zwar (nach wie vor) eine gemeinsame Fluidwanne -- zum Zweck der leichteren Reinigung und Wartung -- vorzusehen, diese jedoch in geeigneter Weise für die beiden Fluidkreisläufe zu teilen, so dass es zu keinen unerwünschten Vermischungen der verwendeten Fluide kommt. Besonders bevorzugt ist es im Rahmen dieser Weiterbildung zudem, den jeweiligen Flüssigkeitskreiläufen Mittel zuzuordnen, mit denen, je nach Anwendungsfall und Reinigungszweck, die PH-Werte der jeweiligen Fluide gezielt und geeignet verändert werden können; im Rahmen der vorliegenden Erfindung hat es sich nämlich herausgestellt, dass auf eine Filterwirkung des Pflanzenöls, je nach zu filternden Schmutzpartikeln, ein PH-Wert des Öls einen entscheidenden Einfluss besitzt, so dass es gemäß einer bevorzugten Weiterbildung der Erfindung möglich ist, durch Zusetzen geeigneter Säuren (z. B. Carbonsäure, Essigsäure) bzw. basischer Stoffe (Wasserglas, Natronlauge, Kalilauge bzw. Kalzium) hier eine PH-Feineinstellung zur Anpassung an einen Filterungszweck vorzunehmen.

Gemäß einer weiteren bevorzugten Weiterbildung der Erfindung ist vorgesehen, der erfindungsgemäßen Anordnung ein (oder mehrere) Filter vorzuschalten, wobei ein solches vorgeschaltetes Filter günstig ebenfalls mit dem ohnehin schon im Rahmen der Anordnung benutzten Pflanzenöl gespült werden kann, so dass insoweit der (ohnehin vorhandene) Flüssigkeitskreislauf lediglich für dieses weiterbildungsgemäß vorgeschaltete Filter erweitert werden muss. Wie auch als günstige Ausführungsform für Vor- und/oder Hauptfilter bietet es sich für das vorgeschaltete Filter an, Keramikfüllkörper zur Realisierung der Filteroberfläche zu verwenden, welche dann in der erfindungsgemäßen Weise mit dem Pflanzenöl im Rahmen eines permanent fließenden Kreislaufes benetzt werden.

Eine alternative Realisierungsform der vorliegenden Erfindung liegt darin, eines der beiden Filter der erfindungsgemäßen Luftfiltervorrichtung als Trockenfilter auszubilden, wobei es sich hier als besonders bevorzugt herausgestellt hat, einen Filterkörper aus Kalziumcarbonat oder Kalziumhydroxid mit Kochsalz als wirksamem Filtermaterial zu beschichten. In der erfindungsgemäßen Kombination mit einem Pflanzenölfilter zeigt sich hier eine besonders günstige Wirkung in der Abluftreinigung im Metallwesen, insbesondere beim Gießen oder Härten, bei der Verwendung in Zusammenhang mit Krematorien oder mit Motorenabgasen.

Eine alternative Realisierungsform der Erfindung, für welche im Rahmen des Anspruches 11 unabhängiger Schutz beansprucht wird, sieht vor, sowohl Vor- als auch Hauptfilter als Trockenfilter auszubilden. Insbesondere bei Luft mit hohem Kohlenwasserstoffgehalt ist eine solche Realisierungsform vorteilhaft, wobei insbesondere auch dann das Hauptfilter als Feuchtigkeitsabscheider wirken kann.

Besonders hervorzuheben ist zudem, dass die vorliegende Erfindung bemerkenswerte Wirksamkeit betreffend das Entfernen von Bakterien und anderen Kleinstlebewesen, Pollen od.dgl. aus der Abluft besitzt. Damit eignet sich die vorliegende Erfindung insbesondere auch zur Abluftreinigung in Umgebungen, die durch Ansammlungen von Menschen geprägt sind, wie etwa in Supermärkten an den Kassen, wo zum Teil schlechte Luftbedingungen dadurch noch weiter verschärft werden, dass durch Aus- und Einpacken Stäube und Bakterien entstehen. Ein besonders geeigneter Anwendungsfall der Erfindung liegt daher auch im Zusammenhang mit Luftreinigungsgeräten im Kassenbereich von Supermärkten, wobei darüber hinaus derartige Vorrichtungen, die typischerweise schwebend an der Decke befestigt sein können, sich auch noch als Werbeträger für geeignete Werbeaufdrucke eignen.

Eine alternative Realisierungsform der vorliegenden Erfindung liegt darin, beide Filter der erfindungsgemäßen Luftfiltervorrichtung mit Fluiden zu spülen, jedoch für einen der beiden Filter zu diesem Zweck eine weiter bevorzugt alkalische Wasserlösung zu verwenden. Eine solche Anordnung hat sich als besonders wirksam herausgestellt bei der Abluftreinigung in der Lebensmittelproduktion sowie generell im Bereich biologischer Gase bwz. Dämpfe.

Während gemäß einer bevorzugten Ausführungsform das erfindungsgemäß eingesetzte Pflanzenöl ein (gereinigtes) Rapsöl ist, so bietet es sich insbesondere auch an, andere aus nachwachsenden Rohstoffen erzeugte Pflanzenöle, z.B. Maiskeimöl, Distelöl, Olivenöl, Sonnenblumenöl, Nußöl, Leinsamenöl oder geeignete Mischungen aus diesen einzusetzen, wobei, gemäß einer weiteren bevorzugten Ausführungsform, diese Öle sich sehr gut dazu eignen, ihnen Geruchsstoffe beizumischen, so dass über diesen Effekt der Beimischung von Geruchsstoffen, z.B. Vanille, Rosenduft, Pfefferminze, Kaffeegeruch usw., ein zusätzlicher Effekt bei der Raumluftverbesserung erreicht werden kann. Somit eignet sich die vorliegende Erfindung nicht nur dazu, effektiv Abluftreinigung von Gerüchen vorzunehmen, insbesondere durch Wirkung von im Rahmen der vorliegenden Erfindung eingesetzter Trokkenfilter, auch kann durch diese Weiterbildung der Erfindung eine aktive Aromatisierung erfolgen.

Im Ergebnis wird durch die vorliegende Erfindung in überraschend einfacher und wirksamer Weise ein Lösungsweg beschrieben, wie insbesondere auch problematische, stark belastete Abluft wirksam, mit dauerhafter, gleichbleibend guter Filterwirkung und unter Minimierung des Reinigungs- und Wartungsaufwandes gereinigt werden kann.

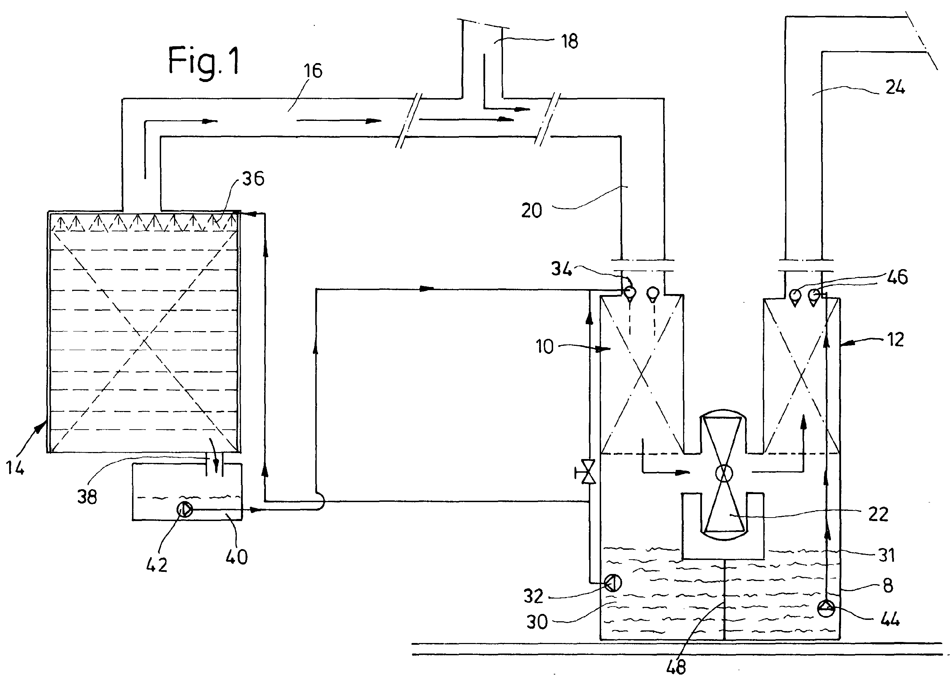

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Schaubild einer Luftfiltervorrichtung gemäß einer ersten, bevorzugten Ausführungsform der Erfindung mit eingezeichnetem Fluss der zu reinigenden Abluft.

Die Abluft gemäß Fig. 1 weist ein im Querschnitt H-förmiges Filtergehäuse 8 auf, welches bodenseitig einen zum Ausbilden einer Boden- bzw. Ölwanne 30 durchgängigen, geschlossenen Bereich aufweist.

In den jeweiligen aufwärts weisenden freien Endabschnitten des Filtergehäuses 8 ist ein Vorfilter 10 bzw. ein Nachfilter 12 aufgenommen, die jeweils als mit Pflanzenöl (im konkreten Beispiel: Rapsöl) benetzte Keramikfilter ausgebildet sind. Im Mittelbereich des Filtergehäuses 8 ist zudem eine Ventilatoranordnung 22 vorgesehen, welche, entsprechend den schematisch gezeigten Pfeilen im Filtergehäuse 8 von Fig. 1, auf das Vorfilter 10 eine Saug- und auf das Nachfilter 12 (im weiteren auch "Hauptfilter" genannt) eine Druckwirkung ausübt.

Im Bereich der Bodenwanne 30 ist das Filtergehäuse 8 bis zu einem Füllstandspegel 31 mit gereinigtem Rapsöl (eines PH-Wertes von 4 - 5) gefüllt, und, wie beim Ausfühungsbeispiel der Fig. 1 zu erkennen ist, es ist die Bodenwanne 30 durch eine mittige, flüssigkeitsdichte Wand 48 in zwei in etwa hälftige Abschnitte geteilt.

Die Wand 48 dient dazu, bei der in Fig. 1 gezeigten Luftfiltervorrichtung zwei getrennte Rapsöl- bzw. Flüssigkeitskreisläufe auszubilden, wie im weiteren erläutert werden wird:
Ein erster Ölkreislauf beginnt bei einer ersten, in den linksseitigen Bereich (d.h. den Bereich des Vorfilters 10) der Ölwanne 30 hineinreichenden ersten Ölpumpe 32, die Rapsöl aus der Wanne 30 außerhalb des Filtergehäuses aufwärts bis zu Öleinlässen (Öl- bzw. Spritzdüsen) 34 fördert, welche am einlassseitigen (d.h. oberen) Ende des Vorfilters 10 vorgesehen und so angeordnet sind, dass durch Wirkung der Düsen 34 ein permanenter, von der ersten Ölpumpe 32 geförderter Rapsölstrom auf die im Vorfilter 10 enthaltenen Keramik-Trägerkörper gesprüht wird, so dass eine für eine Luftfilterung wirksame, ölbenetzte Oberfläche entsteht. Das die (in der Fig. 1 nicht näher gezeigten) Keramik-Füllkörper des ersten Vorfilters benetzende Rapsöl tropft, wie unmittelbar zu erkennen ist, in die darunterliegende Ölwanne 30 (genauer gesagt deren linksseitigen Teil), nachdem das durch die Düsen 34 versprühte Öl über die Filterkörper gelaufen ist und im Filterbetrieb etwaige Schmutzbzw. Verunreinigungspartikel der hindurchtretenden Luft absorbiert hat. Im Ergebnis werden diese Schmutzpartikel vom Rapsöl mitgeschwemmt und sammeln sich als Bodensatz in der Ölwanne 30, wo dann die Verunreinigungsstoffe in ansonsten bekannter Weise periodisch abgezogen bzw. entnommen werden können.

Zusätzlich fördert die erste Ölpumpe 32 Rapsöl aus der Bodenwanne 30 zu einlassseitigen Spritzdüsen 36 eines ebenfalls als Keramikfilter ausgebildeten vorgeschalteten Filters 14, welches einen Ablufteinlass für die Fig. 1 gezeigte Anlage ausbildet, über eine Rohrleitung 16, einen Nebeneinlass 18 (Bypass, für das Einleiten z.B. von Abluftströmen aus Nebenräumen in das Filtersystem) sowie ein Mischrohr 20 mit dem Einlass des Vorfilters 10 verbunden ist und, mit Ausnahme einer anderen geometrischen Anordnung, prinzipiell dasselbe Filter- bzw. Reinigungsprinzip aufweist, wie das vorstehend beschriebene Vorfilter 10, d.h. das Raps- bzw. Pflanzenöl benetzt eine geeignete Filteroberfläche ausbildende Filter- bzw. Füllkörper und nimmt auf diesem Wege Verschmutzungspartikel aus der eintretenden Luft auf.

Aus einem bodenseitigen Auslass 38 des vorgeschalteten Filters 14 nach dem Durchfließen austretendes, mit Schmutzpartikeln beladenes Rapsöl wird von einer vorgeschalteten Ölwanne 40 aufgefangen und einer dieser zugeordneten vorgeschalteten Ölpumpe 42 in der schematisch gezeigten Weise zum Schließen des Ölkreislaufes mit der ersten Ölpumpe 32 und dem Vorfilter 10 zu den Spritzdüsen 34 des Vorfilters 10 geleitet.

Wie zudem aus der Fig. 1 erkennbar ist, ist dem rechtsseitigen (d.h. dem Nach- bzw. Hauptfilter 12 zugeordneten) Teil der Ölwanne 30 ein weiterer, unabhängiger und getrennter Ölkreislauf zugeordnet, nämlich basierend auf einer zweiten Ölpumpe 44, welche, analog dem Flüssigkeitskreislauf für das Vorfilter 10, geeignete Öl- bzw. Spritzdüsen 46 am oberen, auslassseitigen Ende des Hauptfilters 12 mit Rapsöl beschickt. Auch hier wird die Filterwirkung erreicht, indem das Rapsöl Keramik-Filterelemente des Hauptfilters 12 benetzt und durch das Hauptfilter 12 hindurchfließende, mit Schadstoffen belastete Abluft mit der so gebildeten, wirksamen Öl-Oberfläche reagiert, dass Schadstoffe aus der Luft in das Öl übergehen und, nach dem Hindurchlaufen durch das Filter 12, sich im Bodenbereich der Ölwanne sammeln und geeignet abgezogen werden können. Durch ein am auslassseitigen Ende des Hauptfilters 12 vorgesehenes Auslassrohr 24 tritt dann von Schadstoffen gereinigte Reinluft entweder zurück in einen zu reinigenden Raum, oder in die Umgebung.

### Der Betrieb der in Fig. 1 gezeigten Anlage ist wie folgt:

Zunächst wird durch geeignete Wahl der jeweiligen Fluide im linksseitigen, zweistufigen Flüssigkeitskreislauf (d.h. Vorfilter 10 sowie diesem vorgeschaltetes Filter 14) eine Anpassung an den gewünschten Reinigungszweck vorgenommen. Insbesondere kommt es hier darauf an, einen geeigneten PH-Wert einzustellen sowie eine geeignete Benetzungsmenge (entsprechend einer Durchflussgeschwindigkeit des Öls durch die jeweiligen Filter) einzustellen. Entsprechend findet eine Fluidauswahl und Parametereinstellung für den rechtsgelegenen, unabhängigen Flüssigkeitskreislauf für das Nachbzw. Hauptfilter 12 statt.

Zu reinigende Luft, z.B. Luft aus einem Gebäude-Innenraum, tritt dann durch einen Lufteintritt in das vorgeschaltete Filter 14 ein, wird durch die Leitung 16, ggf. gemischt mit zusätzlich über den Einlass 18 hineingeführter Luft, zum Vorfilter 10 geführt, dort ein weiteres Mal mit Hilfe des im Kreislauf fließenden Fluids gereinigt, wird daraufhin dann durch Wirkung der Ventilator- bzw. Rotoranordnung 22 durch das Nach- bzw. Hauptfilter 12 gedrückt und nach Reinigung in diesem Filter durch den Auslass 24 zurück in den Raum oder nach außerhalb entlassen. Bei jedem dieser Filterschritte findet, wie erwähnt, eine Flüssigkeitsfilterung durch die mittels der Flüssigkeitskreisläufe benetzten Filteroberflächen in den jeweiligen Filtereinheiten statt, wobei insbesondere die Ausführungsform der Fig. 1 hier ein hohes Maß an Flexibilität bildet: Nicht nur ist es möglich, für Vor- und Hauptfilter verschiedene PH-Werte einzustellen, auch liegt es bei einem jeweiligen Anwender bzw. einem Abluft-Reinigungszweck, verschiedene Fluide zu nehmen (also z.B. den Vor- oder den Hauptfilter statt mit Rapsöl mit einer alkalischen Lösung zu betreiben), auf das vorgeschaltete Filter 14 vollständig zu verzichten, zusätzlich oder alternativ in der Art des vorgeschalteten Filters 14 der Anordnung ein (gespültes oder trockenes) Filter nachzuschalten, oder andere Filtermaßnahmen zu treffen. Vorteilhaft wird insbesondere auch in einem Umluftverfahren der Hygienestandard gemäß VDI 6022 erreicht.

Gemäß einer weiteren, bevorzugten Ausführungsform der Erfindung, insbesondere zur Verwendung innerhalb eines geschlossenen Raumluftsystems, bietet es sich an, dem eingesetzten Pflanzenöl geeignete Geruchs- bzw. Aromastoffe zuzusetzen, denn durch den Kontakt zwischen Abluft und Ölfilm in den Filtern kommt es so zu einem besonders schonenden, einfach dosierbaren Abgeben auch dieser zusätzlichen Aromastoffe in die gereinigte Luft (und damit zurück in den Innenraum), mit einer die Raumluft weiter verbessernden Wirkung.

Gemäß einer weiteren, in den Figuren nicht gezeigten Ausführungsform ist es zudem möglich, das Vorfilter 10 oder das Nachfilter 12 als sog. Trockenfilter auszubilden, also mittels geeigneter, nicht mit einem Fluid benetzter Filterkörper zu realisieren, wobei sich hier für Abluftzwecke insbesondere kalziumbasierte Filterkörper bewährt haben, welche mit Natriumchlorid beschichtet sind und so eine NaCl-Wirkungsfläche für die hindurchtretende Abluft anbieten.

Die nachfolgende Tabelle 1 verdeutlicht einige typische Konfigurationen für jeweilige Einsatzzwecke einer gemäß der Erfindung zur realisierenden Luftfiltervorrichtungen, wobei es bei den in Tabelle 1 angegebenen Zwecken und jeweiligen Filterausbildungen möglich ist, hier ein vorgeschaltetes Filter (14 gemäß Fig. 1) wahlweise und zur weiteren Verbesserung vorzusehen, und/oder ein entsprechendes Filter nachzuschalten; dies ändert jedoch zunächst nichts an der prinzipiell hohen Filterwirkung der erfindungsgemäßen zweistufigen Anordung aus Vor- und Hauptfilter.

**Tabelle 1**

| **Einsatzzweck (Abluft)** | **Vorfilter** | **Hauptfilter** |
|---|---|---|
| Lebensmittelproduktion, z.B. Rauchwaren (Schinken, Wurst) | Alkalisches Wasser Ph: ca. 10 | Rapsöl Ph: ca. 5 |
| Biologische Gerüche, Abluft aus Ställen | Alkalisches Wasser Ph: ca. 10 | Rapsöl Ph: ca. 5 |
| Lebensmittelverarbeitung | Rapsöl Ph: ca. 5 | Trockenfilter NaCl auf CaO |
| Metallverarbeitung: Giessereiwesen, Härten z.B. Alu, Eisen | Trockenfilter NaCl auf CaO | Rapsöl Ph: ca. 5 |
| Biol. Verbrennung (Krematorien), Dioxine, Furane | Trockenfilter NaCl auf CaO | Rapsöl Ph: ca. 5 |
| Motorenabgase, spez. Diesel | Trockenfilter KO auf CaO | Rapsöl Ph: ca. 5 |
| Kohlenwasserstoffe, insb. Toluol, Xylol, Butylacetat, Ethylacetat, PMA Lösungsmittel, auch: Druck- und Beschichtungsanlagen | Trockenfilter NaCl auf CaO | Rapsöl Ph: ca. 5 |
| CO₂, CO, SO₂ | Trockenfilter NaCl auf CaO | Rapsöl Ph: ca. |
| Biologische Feuchtkörper: Viren, Bakterien (Legionellen), Milben, Pollen usw. | Trockenfilter NaCl auf CaO | Rapsöl Ph: ca. 5 |

Eine typische Reinigungskapazität der in Fig. 1 gezeigten Filteranordnung liegt im Bereich zwischen etwa 1.000 und etwa 30.000 m³/h.

Wie sich zudem aus der Tabelle ergibt, weist die vorliegende Erfindung eine hohe Wirksamkeit insbesondere auch in problematischen, d.h. stark belasteten Abluftsituationen auf; hierzu gehört insbesondere auch Abluft aus biologischen oder Verbrennungsprozessen, wie etwa Krematorien. Gerade auch im Bereich der Kohlenwasserstoffe, der Rußfilterung sowie für Benzol (potentiell bedeutsam als Abgasfilter für Kraftfahrzeuge) eignet sich die vorliegende Erfindung, die eine sehr hohe Filterleistung mit günstigen Betriebsund Reinigungseigenschaften verbindet.

Die vorliegende Erfindung ist bei der Realisierung von Voroder Hauptfilter nicht auf keramische Füllkörper (die dann von einem Fluid benetzt werden können) beschränkt. So ist es insbesondere auch möglich, Füllkörper aus Kunststoff (z.B. PP) einzusetzen; keramische oder mineralische Füllkörper kommen insbesondere auch bevorzugt bei heißer Abluft zur Anwendung.

Zur Realisierung von Trockenfiltern ist es im Rahmen der Erfindung möglich, statt der Ca-haltigen Körper Rohre aus Kunststoff oder Hartpappe zu verwenden, welche, nach Eintauchen in Wasserglas und Trocknen, durch Tauchen in Kalziumcarbonat und nachfolgendes Bestreuen mit Salz (bevorzugt auf der Innen- und Außenseite) hergestellt werden.

Insbesondere bei der Reinigung von mit Kohlenwasserstoff belasteter Abluft ist es vorteilhaft, die Abluft zunächst über ein erfindungsgemäßes Trockenfilter zu führen, bevor dann die Ölfilterung erfolgt. Es hat sich herausgestellt, dass bei der Trockenfilterung eine alkalische Ionisation stattfindet, wobei, reibungsbedingt, das Salz sowie die Kalziumverbindung des Filters mit der aromatischen Verbindung (genauer gesagt den Sauerstoffatomen des Kohlenwasserstoffes) reagieren, so dass auf diesem Wege bereits eine höchst effektive Reinigung erfolgen kann (VDI 6022).

Hier wirkt sich insbesondere auch aus, dass gemäß einer weiteren bevorzugten Weiterbildung der Erfindung die Trokkenfilter Luftverwirbelungen in der durchfließenden Abluft erzeugen, die insoweit eine Zwangsreibung auf der Oberfläche der beschichteten Füllkörper erreichen.

## Patentansprüche

1. Luftfiltervorrichtung mit einem Lufteinlass (20), einem diesem nachgeschalteten Vorfilter (10), einem dem Vorfilter nachgeschalteten Hauptfilter (12) und einem dem Hauptfilter nachgeschalteten Auslass (24) für Reinluft,
**dadurch gekennzeichnet, dass** das Vor- und/oder Hauptfilter Mittel (32, 34; 44, 46) zum kontinuierlichen Benetzen einer Wirkungsoberfläche des Filters mit einem in einem Flüssigkeitskreislauf fließenden Pflanzenöl aufweist.

2. Vorrichtung nach Anspruch 1, **dadurch gekennzeichnet, dass** das Vorfilter und das Hauptfilter jeweils die Mittel zum Benetzen aufweisen und für Vor- und Hauptfilter getrennte Flüssigkeitskreisläufe für das Pflanzenöl vorgesehen sind.

3. Vorrichtung nach Anspruch 2, **dadurch gekennzeichnet, dass** die getrennten Flüssigkeitskreisläufe eine gemeinsame, durch ein Trennelement (48) flüssigkeitsundurchlässig unterteilte Fluidwanne (30), insbesondere Ölwanne, aufweisen.

4. Vorrichtung nach einem der Ansprüche 1 bis 3, **dadurch gekennzeichnet, dass** dem Flüssigkeitskreislauf Mittel zum Einstellen eines Säuregehaltes und/oder PH-Wertes eines im Flüssigkeitskreislauf fließenden Fluids zugeordnet sind, die bei getrennten Fluidkreisläufen für Vor- und Hauptfilter ein getrenntes Einstellen erlauben.

5. Vorrichtung nach einem der Ansprüche 1 bis 4, **dadurch gekennzeichnet, dass** dem Vorfilter ein Keramikfilter (14) vorgeschaltet ist, das mit dem in dem Flüssigkeitskreislauf fließenden Pflanzenöl gespült wird.

6. Vorrichtung nach einem der Ansprüche 1 bis 5, **dadurch gekennzeichnet, dass** das Vor- oder das Hauptfilter als Trockenfilter mit einer Mehrzahl von Filterelementen ausgebildet ist, die einen mit Kochsalz beschichteten Füllkörper aufweisen, der bevorzugt eine Ca-Verbindung aufweist.

7. Vorrichtung nach einem der Ansprüche 1 bis 5, **dadurch gekennzeichnet, dass** das Vor- oder Hauptfilter als mit in einem Flüssigkeitskreislauf fließender, alkalischer Wasserlösung gespültes Flüssigkeitsfilter ausgebildet ist.

8. Vorrichtung nach einem der Ansprüche 1 bis 7, **dadurch gekennzeichnet, dass** das Pflanzenöl ein Öl ist, welches aus der Gruppe bestehend aus Rapsöl, Maiskeimöl, Distelöl, Olivenöl, Sonnenblumenöl, Nußöl, Leinsamenöl oder Mischungen von diesen, ausgewählt ist.

9. Verwendung der Vorrichtung nach einem der Ansprüche 1 bis 5, 7 oder 8 mit einer das Vorfilter benetzenden alkalischen Wasserlösung und das Hauptfilter benetzendem Pflanzenöl zur Abluftreinigung aus der Lebensmittelproduktion, insbesondere der Produktion von Rauchwaren, oder zur Abluftreinigung von biologischen und Stallgerüchen.

10. Verwendung der Vorrichtung nach einem der Ansprüche 1 bis 6, 8 mit einem NaCl-haltigen Trockenfilter als Vorfilter sowie einem mit Pflanzenöl benetzten Hauptfilter zur Abluftreinigung im Gießereiwesen, insbesondere betreffend das Gießen oder Härten von Aluminium und Eisen, zur Abluftreinigung von Krematorien, von Motorenabgasen, oder zur Entfernung von biologischen Feuchtkörpern aus der Abluft.

11. Luftfiltervorrichtung mit einem Lufteinlass (20), einem diesem nachgeschalteten Vorfilter, einem dem Vorfilter nachgeschalteten Hauptfilter und einem dem Hauptfilter nachgeschalteten Auslass für Reinluft,
**dadurch gekennzeichnet, dass** das Vor- und Hauptfilter als Trockenfilter mit einer Mehrzahl von Filterelementen ausgebildet sind, die einen mit Kochsalz beschichtenden, Ca-haltigen Füllkörper aufweisen.
